Europäisches Patentamt

European Patent Office

Office européen des brevets

(11) Publication number: **0 363 160**
**A2**

(12) # EUROPEAN PATENT APPLICATION

(21) Application number: 89310123.8

(22) Date of filing: 03.10.89

(51) Int. Cl.5: **G05B 19/42**

(30) Priority: 03.10.88 US 252611

(43) Date of publication of application:
**11.04.90 Bulletin 90/15**

(84) Designated Contracting States:
**DE FR GB SE**

(71) Applicant: **FORD MOTOR COMPANY LIMITED**
**Eagle Way**
**Brentwood Essex(GB)**

(84) **GB**

Applicant: **FORD FRANCE S. A.**
**B.P. 307**
**F-92506 Rueil-Malmaison Cédex(FR)**

(84) **FR**

Applicant: **FORD-WERKE**
**AKTIENGESELLSCHAFT**
**Werk Köln-Niehl Henry-Ford-Strasse**
**Postfach 60 40 02**
**D-5000 Köln 60(DE)**

(84) **DE**

Applicant: **FORD MOTOR COMPANY**
**County of Wayne**
**Dearborn, MI 48120(US)**

(84) **SE**

(72) Inventor: **Klann, Richard R.**
**6043 Norborne**
**Dearborn Heights Michigan 48127(US)**

(74) Representative: **Messulam, Alec Moses et al**
**A. Messulam & Co. 24 Broadway**
**Leigh on Sea Essex SS9 1BN(GB)**

(54) Generic application system for programmable robot manipulator.

(57) An application system for a programmable robot manipulator (10) includes an interactive module (18) for questioning an operator and for receiving responses from the operator, with the interactive module including a visual display (24), a number of operator input devices (20) arrayed about the visual display (24), and computer processors (21) operatively associated with the visual display (24) and the operator input devices (20) for displaying a sequence of program menus to the operator by means of the visual display and for recording the contemporaneous responses of the operator to each of the menus so that the operator may program the robot manipulator by responding to the program menus.

FIG.1

# GENERIC APPLICATION SYSTEM FOR PROGRAMMABLE ROBOT MANIPULATOR

This invention relates to a generic application system for a programmable robot manipulator by which the operator of the robot may program the robot to perform a task in a multi-dimensional space.

The programming of a robot manipulator often involves teaching of the manipulator by a human operator. In the industrial setting, programmable robot manipulators are familiarly used for such tasks as the application of sealants to automotive bodies, spot welding of assemblies, spray painting, parts picking, and other applications. Although the purpose and results of each such application are different, each presents a common problem to the the designer of the robot control system, insofar as the robot must somehow be taught the path it is to follow while performing its assigned task. Such teaching typically involves the use of some type of interactive device for programming a controller containing software. Allowed U.S. application 07/043,581, entitled "Automated Curvilinear Path Interpolation For Industrial Robots", which was filed on April 28, 1987, and which is assigned to the assignee of the present invention, discloses and claims a method for accomplishing an automated curvilinear path interpolation for industrial robots in which the human operator is required to input to the robot controller a minimal number of waypoints which are usually coincident with various discontinuities in the robot,s prescribed path. U. S. application 07/043,581 teaches a method by which a robotic controller may automatically calculate trajectories for the robot's movement between such minimum number of specified points.

Human operators typically interact with robot manipulators by means of keyboards comprising various hard wired keys--i.e., keys which have a specific, fixed function. U.S. Patents 3,920,972; 4,224,501; 4,379,335; 4,517,652 and 4,658,348 disclose robotic controller devices with which a human operator works by means of fixed function or hardwired keys. Such types of interactive robotic programming devices are difficult for operators to master because they require the memorisation of the functions ascribed to many different keys. Alternatively, if the operator has not memorised key functions he is required to pore over program documentation to determine the particular function for each key. In either event, much time is lost which could otherwise be used in actually programming the robotic manipulator.

Yet another problem occurs with the use of hard wired keys in robotic controllers. Because the types of parametric specifications which the operator must enter are dependent upon the task to be performed by the robot, different controllers are generally required in the event that the robot is to perform a spot welding operation versus a sealant application operation. This stems from functional differences in the nature of the work being performed. For example, the application of sealant is generally done at a high speed and with a smooth, continuous motion, whereas spot welding is a discontinuous motion marked by a residence time whenever a weld is placed. Thus, it has not been generally possible to produce a generic controller for robot manipulators. It is one object of the present invention to provide a generic controller.

Video display devices may be used for the purpose of assisting an operator in interpreting the function of various input devices or keys. U.S. Patents 4,530,046 and 4,700,313 disclose two such types of controllers including video displays. Other controllers including video displays are shown in Design News, August 6, 1984, at page 245 and ASEA Journal, 1982, Vol. 52, No. 6 at page 145. Still other types of controllers are shown in Control Engineering, June 1984, at pages 79-81. Although controllers having visual displays have been constructed including soft keys i.e., keys which have a different purpose depending upon the particular portion of a controlled program through which the operator is working, such displays have not served to solve yet another problem associated with robot manipulator programming.

Although the use of soft keys, either exclusively or in combination with a few hard wired keys, provides flexibility necessary for a generic application system, mere substitution of soft keys for hard keys, without sufficient regard for the memory capabilities of the human operator is not enough to produce a practicable generic control system. Conventional robot manipulator controllers, including those employing several soft keys, have not been practicable because operators have been required to scroll through many different menus and/or lines of text searching for appropriate places at which to enter data or other responses. The operator's task is frequently complicated further because the menus are not identified with respect to a specific programming parameter. As a result, such programming systems have relied too heavily upon the memory capability of the operator. An application system according to the present invention, however, requires only that the operator respond to each of a series of menus which are presented to him by means of an interactive module. The operator is not required to search for and to select any particular menu. Rather, a system according to the present invention will sequentially select appropriate menus with a selection process which is transparent to the human operator. Further, each menu will be identifiable, and therefore, selectable by the operator as relating to at least one programming parameter of the robot such as waypoint location and end effector speed, to name but two programming parameters applicable to a teaching operation.

A single application system according to this invention may be used to program robotic manipulators for different types of tasks such as sealant application, spray painting, spot welding, or other types of work.

It is an object of the present invention to provide an application system for a programmable robot controller which may be employed with robot manipulators intended to perform a wide variety of functions such as sealant application, spot welding, spray painting or other functions.

It is an advantage of the present invention that an application device according to this invention may be employed by human operators who have received a minimal amount of training.

It is a further advantage of the present invention that a human operator employing a device according to this invention need not memorise either the functions of any keys based upon the unique work which the robot manipulator is to perform or the location of any particular menus or data entry points.

It is yet another advantage of the present invention that a generic application system for a programmable robot manipulator according to this invention may be used interchangeably for programming robot manipulators for a variety of tasks.

An application system for teaching a programmable robot manipulator to perform a task upon a workpiece in multi-dimensional space according to the present invention comprises an interactive module for prompting an operator and for receiving responses from the operator, with the interactive module including a visual display and an associated microcontroller, and a plurality of operator input devices and an associated microprocessor. The operator input devices are arrayed about the visual display. A system according to this present invention further includes robot controller operatively associated with said interactive module for displaying a plurality of program menu sequences to the operator by means of the visual display as well as means for recording the contemporaneous responses of the operator to each of the menus so that the operator may program the robot manipulator by responding to questions within the program menus. Each of the menu sequences is selected and specified by the operator as relating to a specific programming parameter of the robot. The robot controller and microprocessor selectively enable one or more of the input devices according to the requirements of each of the menus, while simultaneously identifying the purpose of each such menu. When an input device is enabled, the microprocessor will alert the operator of the enablement by means of the visual display. Such enablement will also be accompanied by identification in the visual display of the function of each input device.

An application system according to this invention may include a sequence of program menus comprising a plurality of steps for directing a human operator to teach the robot manipulator a series of points in a multi-dimensional space so that the manipulator will be able to move repetitively through each of the points. The sequence of menus presented by the computer processor may be variant or invariant. In the event that the sequence is variant, the precise content of the sequence of program menus may depend upon the responses of the operator to the menus, as well as upon the particular task to be performed by the robot manipulator.

A method of programming a robot manipulator to follow a predetermined path according to the present invention comprises the steps of (i) sequentially presenting to an operator, by means of a visual display, a sequence of individual programming menus comprising a plurality of questions to be answered by the operator, with the content of at least some of said questions being dependent upon the operator's responses to certain of such questions; (ii) recording responses of the operator to such questions; and (iii) generating a path for the robot manipulator to follow based upon the responses of the operator. Such questions may require the operator to (i) jog the robot manipulator through a series of selected points along the path to be travelled while recording the co-ordinates of each of said points, and to (ii) specify end effector movement speed for each of said points.

The invention will now be described further, by way of example, with reference to the accompanying drawings, in which :

Figure 1 is a partially schematic representation of a robot manipulator and a generic application system according to the present invention.

Figure 2 illustrates the display and input devices of the operator interactive module of an application system according to the present invention. Figure 2 illustrates a typical menu provided by a system according to the present invention.

Figure 3 is a block diagram illustrating the major component parts of an operator interactive module according to the present invention. of a system according to the present invention.

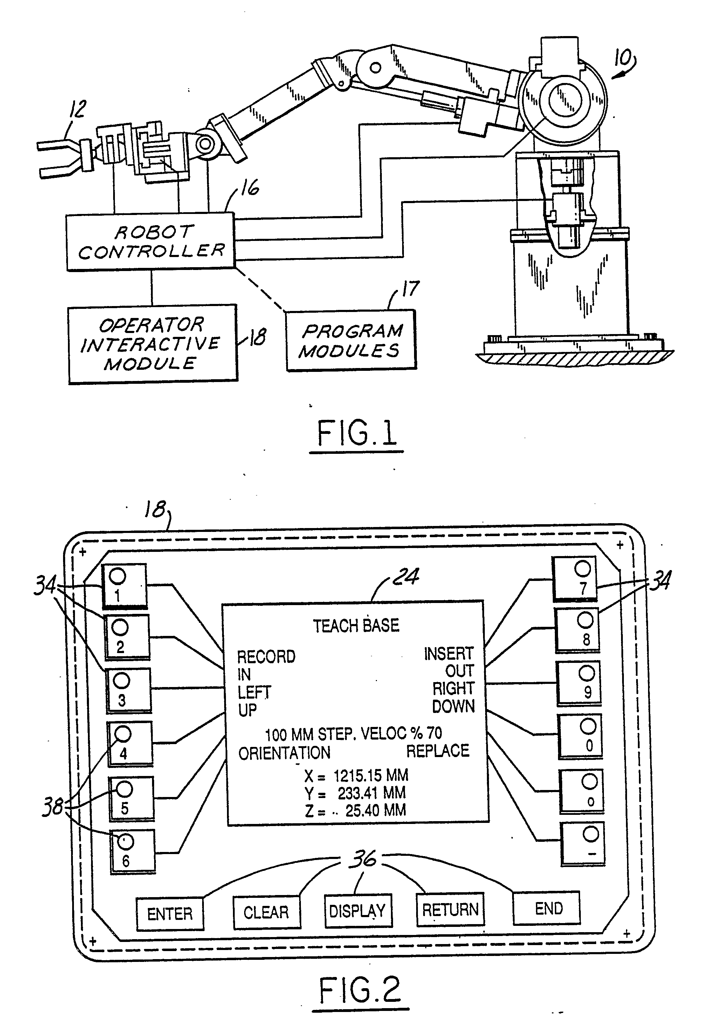

As illustrated in Figure 1, a generic application system according to the present invention is intended for use with an industrial robot manipulator which is depicted generally as having a combination of joints and linkages allowing the robots end effector to be positioned within multi-dimensional space. Although robot manipulator 10 is shown as having a gripper form of end effector, 12, those skilled in the art will appreciate in view of this disclosure that the end effector could comprise a sealant applicator, a spray paint gun, a spot welding head, or other type of work device. Robot manipulator 10 is ultimately controlled by robot controller 16. As shown in Figure 1, robot controller 16 communicates with robot 10 and operator interactive module 18. Robot controller 16 incorporates a microprocessor with a plurality of program modules, 17, including but not limited to programs for manual operation by a human operator, teaching of an operation to the robot, editing a robot path, home initialisation, movement calibration, and malfunction diagnostics. A path generation module (not shown) within robot controller 16 converts a relatively small number of waypoints placed into the computer's memory via the teach module to a more complete series of points which the robot manipulator is capable of following. An example of a routine for generating a complete series of waypoints for a robot manipulator to follow from a relatively smaller series of waypoints entered into the controller memory by the human operator is disclosed in allowed U.S. patent application 07/043,581, which is hereby incorporated by reference into this specification.

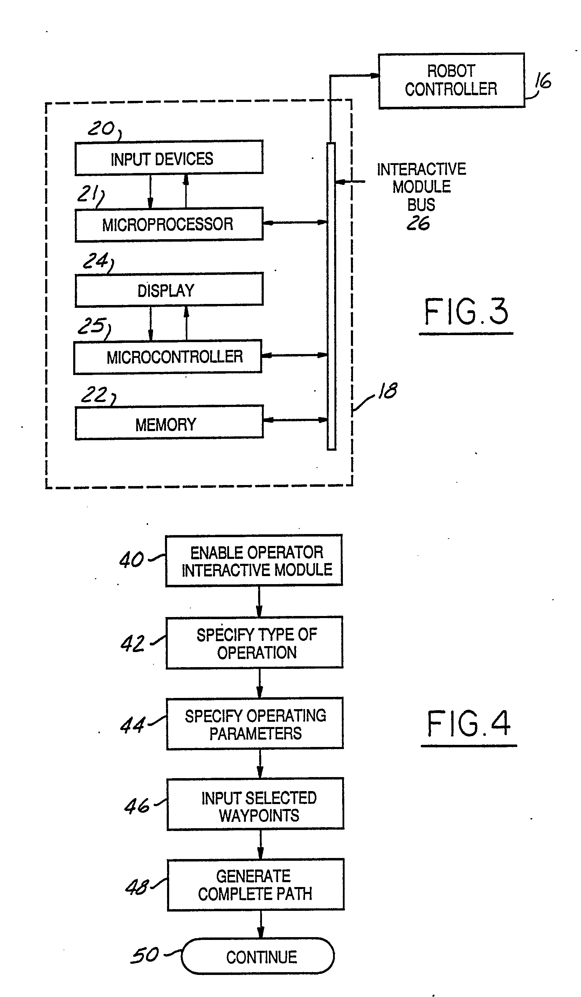

Figure 3 shows the major components of operator interactive module 18, which is used by a human operator to communicate with robot controller 16. The operator interactive module comprises input devices 20, and associated microprocessor 21, memory 22, and display device 24 and associated microcontroller 25. It has been determined that a model Z 80 microprocessor by Zilog is useful for servicing inputs and outputs from the operator interactive module. It has further been determined that a model 8051 microcontroller by Microcontrol is useful for operating the visual display described herein. The functional elements shown in Figure 3 are interconnected as required by interactive module bus 26. Those skilled in the art will appreciate in view of this disclosure that other types of microprocessor control devices could be useful for practising the present invention.

The display and input devices of operator interactive module 18 are shown with particularity in Figure 2. Display screen 24 is located prominently in the centre of operator interactive module 18. Those skilled in the art will appreciate in view of this disclosure that a variety of display devices could be used including but not limited to cathode ray tube (CRT) or other bit-mapped devices such as the Mini Graphic System by Panelvision, Inc., or still other types of visual display elements. Operator interactive module 18 also includes a number of operator input devices arrayed about display screen 24. A series of variable function keys, 34, in this case equal to twelve in number, is arranged in two columns with one column on either side of display screen 24. Each variable function key 34 is said to be a "soft" key because the function of the keys or input devices is dependent upon a particular functional assignment made with reference to individual menus within a sequence of menus presented upon display screen 24.

A single row of fixed function keys, 36, is arrayed below display screen 24. As shown in Figure 2, the fixed function keys may include those functions commonly used for data entry such as "ENTER", "CLEAR", "DISPLAY"," RETURN" and "END". Fixing the functions of keys 36 will not negate the generic capabilities of an application system according to the present invention because the functions ascribed to the hard keys in the present invention do not depend upon the nature of the task the robot manipulator is being programmed to perform. In other words, regardless of whether a robot is being programmed to perform such functions as spray painting, sealer application or spot welding, the function of each of keys 36 will remain the same. This is advantageous because the human operator need learn only a single function for each of keys 36.

One example of operation of a generic application system according to the present invention will now be explained with reference to the flow diagram contained in Figure 4. Following enablement of operator interactive module 18 at block 40, microprocessor 21, microcontroller 25 and display 24 within interactive module 18 will be directed by robot controller 16 to display a sequence of program menus to the operator by means of visual display screen 24. The operator is first requested to select the type of operation, such as teaching, playback, program path editing or other operations. The operator will be requested to input his responses contemporaneously by using input devices 34 and 36. In order to facilitate prompting of the operator's responses, microprocessor 21 will selectively enable one or more of variable function keys 34 for each of the several program menus, while simultaneously identifying the function of each enabled key. In this regard, it should be noted that the term "program menu" refers to a single screen display calling for at least one choice to be made by the human operator.

Whenever robot controller 16 instructs microprocessor 21 to selectively enable one or more of input devices 34 according to the requirements of a menu, microcontroller 25 will alert the operator by means of the visual display. This may be done by illuminating one of the indicator lamps 38 associated with variable function keys 34. Because the input devices (keys) are selectively enabled, an application system according to this invention will be more easily mastered by a human operator. Moreover, the system will not be burdened with the need to reject spurious signals generated by inappropriate keystrokes.

Regardless of whether a programmable robot manipulator considered for a particular application is being used for sealant application, spray painting, welding or some other task, the sequence of program menus presented to the operator by means of an interactive module according to the present invention will generally elicit preliminary information regarding such variables as the tool action centre point, jog velocity, inch-metric display values, working volume, or other similar parameters. Such data are entered at block 44 of Figure 4. Because the robot controller has first been informed at block 42 of the precise type of operation to be performed, i.e. teach, playback, path-edit, etc., the operator will be queried regarding parameters which are specific to the task being performed by the robot. By way of example, the legends appearing on display screen 24 in Figure 2 comprise preliminary data for the teaching process. Selection of the teaching function will trigger the program menu sequence appropriate for teaching the robot to follow a path while performing an operation on a workpiece. In this example, the operator has previously selected the BASE reference system, which comprises a world coordinate system with three axes. All of the variable function keys 34 have been enabled and the indicator lamps 38 are all illuminated. The operator may choose to record the present position as indicated by the X, Y, and Z co-ordinate values expressed in millimetres. To accomplish this, the operator will depress the button next to the legend "RECORD". The operator may also select a direction of motion in the X, Y, Z co-ordinate system. The direction in the case of the X axis is indicated as IN or OUT. With the Y and Z axes, the directions of motion are indicated as LEFT or RIGHT and UP or DOWN, respectively. Movement in any direction is specified to occur in 100 millimetre incremental steps at a velocity of 70% of the maximum robot velocity. Other choices shown in the displayed menu are the programming parameters INSERT, REPLACE and ORIENTATION. INSERT allows the operator to add a waypoint between two existing points. REPLACE allows the operator to correct a point which was entered previously. ORIENTATION allows the operator to change the orientation of the tool action centre point axis. After the operator selects a particular function key 34 followed by the ENTER fixed function key 36, microprocessor 21 will communicate this information to robot controller 16 and a subsequent menu will be displayed. Each subsequent menu will be identifiable as relating to the specific programming parameter which the operator wishes to work with (e.g., ORIENTATION); the operator is not required to page through menus to reach yet other menus to reach the particular menu pertaining to the programming parameter he has specified.

In the present example, once preliminary data have been inserted at block 44, robot controller 16 steps on to block 46, where the robot controller will cause the operator to be presented with a sequence of program menus comprising a plurality of steps for teaching the robot manipulator a series of points in multi-dimensional space so that the manipulator will be able to move repetitively through each of the points. Through the mechanism of display screen 24, robot controller 16 will interrogate the human operator and the responses of the operator, which are entered via input devices 34 and 36, will be recorded contemporaneously and temporarily stored in memory 22.

In a departure from the prior art, an application system according to the present invention will present the operator with a continuous sequence of program menus requiring selection responses by the operator, with each succeeding menu being selected and specified by the operator on the basis of the programming parameter he desires to next implement. Each menu will require an operator response and menus encountered by the operator will seek only information which is related to the specific programming task which the operator either seeks to accomplish or must accomplish in order to properly program the robot. Accordingly, the operator will not become lost in a "maze" of menus and will not be faced with the necessity of paging or scrolling randomly through various menus in order to select the next applicable menu for his programming task. The operator will be guided by the selective enablement of operator input devices 34 and 36 in correspondence with each of the menus as well as by the identification of the function of each input device. Recording of the contemporaneous responses of the operator to questions within the menus obviates the need of the operator to remember detailed responses for any period of time. This contemporaneous recording of operator responses is important because it releases a system according to the present invention from the vagaries of individualised human memory capability.

Thus, it may be seen that a method of programming a robot manipulator to follow a predetermined path according to the present invention may comprise the steps of sequentially presenting to the operator, by means of display screen 24, a sequence of individual programming menus comprising a plurality of questions to be answered by the operator by means of his manipulation of variable function keys 34, and fixed function keys 36, and by recording responses of the operator to the questions, contained within the program menus, in memory 22. Thereafter, the method concludes with the generation of a path for the robot manipulator to follow based upon the recorded responses of the operator. Generation of a path for the robot manipulator to follow will be based upon manipulation of the operator-entered data within the path generation module. Operator input data will be converted to robot control co-ordinates usable for input to the portion of robot controller 16 which performs the actual control of the various motors and linkages found within the robot manipulator. Notwithstanding the type of task to be performed by the robot manipulator, the questions contained within the program menus represented by block 46 of Figure 4 will likely require the operator to jog the robot manipulator through a series of selected points along the path to be travelled and to record the co-ordinates of each of the points. The path generation module will then compile a complete trajectory or path to be travelled by the robot.

A generic application system according to the present invention may be operated with a sequence of program menus which is invariant--i.e. not subject to change based upon operator response. Such an operating system may be suitable for robots performing simpler tasks. This scheme could be used where, for example, a robot manipulator is intended for use with various types and sizes of workpieces while performing a single operation thereupon. Alternatively, the contents of the sequence of program menus presented to the human operator may be rendered variable and dependent upon the responses of the operator. This scheme could be utilised where the particular type of task to be performed by the robot manipulator is variable. In other words, the menu could depend upon whether the end effector is a spray gun, a sealant applicator, spot welder or yet other type of device, as well as upon the size and shape of the workpieces which the robot manipulator is operating upon. Those skilled in the art will appreciate in view of this disclosure that paint spraying requires less accuracy of end effector placement than do sealant application and spot welding. Similarly, the types of motion required for paint application will in certain instances differ from those required for welding and sealer application. Such differences may be used to trigger differences in the menus presented to the human operator.

**Claims**

1. An application system for teaching a programmable robot manipulator (10) to perform a task upon a workpiece in a multi-dimensional space, comprising, an interactive module (18) for prompting a human operator and for receiving responses from said operator, with said interactive module comprising,

(i) a visual display (24);

(ii) a plurality of operator input devices (20) arrayed about said visual display; and

(iii) a microprocessor (21) operatively associated with said input devices;

(iv) a microcontroller (25) operatively associated with said visual display;

(v) a robot controller (16) operatively associated with said microprocessor (21) and said microcontroller (25) for displaying a plurality of program menu sequences to said operator by means of said visual display and for recording the contemporaneous responses of said operator to each of said menus within a memory (22) associated with said microprocessor (21), with each succeeding menu sequence being selected and specified by said operator as relating to a specific function of said robot manipulator, so that said operator may program said robot by responding to questions within said program menus.

2. An application system according to Claim 1 wherein said robot controller and said microprocessor selectively enable one or more of said input devices according to the requirements of each of said menus.

3. An application system according to Claim 2 wherein said robot controller and said microprocessor alert said operator by means of said visual display whenever one or more of said input devices has been enabled.

4. An application system according to Claim 1 wherein said robot controller and said microprocessor selectively identify the functions of said input devices for each menu by means of said display.

5. An application system according to Claim 1 wherein at least one of said program menu sequences comprises a plurality of steps for directing said operator to teach said robot manipulator a series of points in a multi-dimensional space, whereby said manipulator will be able to move repetitively along a path constructed according to a method employing said points as inputs.

6. An application system according to Claim 1 wherein the content of said sequence of program menus is invariant.

7. An application system according to Claim 1 wherein the content of said sequence of program menus is variable and dependent upon the responses of said operator to said menus.

8. An application system according to Claim 1 wherein the content of said sequence of program menus is variable and dependent upon (i) the responses of said operator to said menus, and (ii) the particular type of task to be performed by said robot manipulator.

9. A generic application system for a programming a robot manipulator to perform a task upon a workpiece in multi-dimensional space, comprising, a robot controller, and an interactive module for interrogating an operator and for receiving responses from said operator, with said interactive module comprising:

(i) a visual display;

(ii) a plurality of operator input devices arrayed about said visual display; and

(iii) a microprocessor means and memory operatively associated with said robot controller for: (a) displaying a plurality of program menus, including questions to said operator, by means of said visual display; (b) selectively enabling said operator input devices in correspondence with said menus, while simultaneously identifying the function of each input device as well as the purpose of each menu, and alerting said operator that such enablement has occurred by means of said visual display; and (c) recording the contemporaneous responses of said operator to said questions so that said operator may program said robot manipulator.

10. A method for programming a robot manipulator to follow a predetermined path, comprising the steps of, sequentially presenting to an operator, by means of a visual display, a series of individual programming menus, identified to said operator as relating to a specific function of said robot manipulator, with said menus comprising a plurality of questions to be answered by said operator with the content of at least some of said questions being dependent upon the responses of said operator to certain of such questions, recording said responses of the operator to said questions; and generating a path for said robot manipulator to follow based upon the responses of said operator.

11. A method according to Claim 10 wherein said questions require said operator to jog said robot manipulator through a series of selected points along said predetermined path to be travelled and to record the co-ordinates of each of said points.

12. A method according to Claim 11 wherein said questions further require said operator to specify a movement speed for said robot manipulator through each of said selected points.

## FIG.1

TEACH BASE

RECORD            INSERT
IN                OUT
LEFT              RIGHT
UP                DOWN

100 MM STEP. VELOC % 70
ORIENTATION       REPLACE

X =  1215.15 MM
Y =   233.41 MM
Z = ·· 25.40 MM

ENTER    CLEAR    DISPLAY    RETURN    END

## FIG.2

FIG.3

FIG.4